# FASCICULE DE BREVET EUROPEEN

(11) **EP 1 558 870 B1**
(45) Date de publication et mention de la délivrance du brevet: **20.04.2016**
(21) Numéro de dépôt: 03767921.4
(22) Date de dépôt: 07.10.2003
(51) Int. Cl.: F23C 10/10, F23J 15/02, F23M 5/08, B01J 8/00

(54) **REACTEUR A LIT FLUIDISE CIRCULANT AVEC SEPARATEUR ET GAINE D'ACCELERATION INTEGREE**
REAKTOR MIT ZIRKULIERENDER WIRBELSCHICHT, STAUBABSCHEIDER UND INTEGRIERTER BESCHLEUNIGUNGSSCHLEUSE
CIRCULATING FLUIDIZED BED REACTOR WITH SEPARATOR AND INTEGRATED ACCELERATION DUCT

(30) Priorité: 14.10.2002 FR 0212762
(43) Date de publication de la demande: 03.08.2005
(73) Titulaire: ALSTOM Technology Ltd, 5400 Baden (CH)
(72) Inventeur: BAGLIONE, Daniel, F-94250 Gentilly (FR)
(74) Mandataire: General Electric Technology GmbH
(86) Numéro de dépôt international: PCT/FR2003/050081
(87) Numéro de publication internationale: WO 2004/036118

(56) Documents cités:
- EP-A- 0 481 438
- EP-A- 0 559 388
- EP-A- 0 730 910
- EP-A- 0 990 467
- EP-A- 1 308 213
- WO-A-88/05336
- DE-A- 19 604 565
- US-A- 3 925 045
- US-A- 4 867 948
- US-A- 5 471 955

## Description

La présente invention concerne les réacteurs à lit fluidisé circulant de réaction gaz solides et de production d'énergie et les chaudières.

Ces réacteurs comprennent une chambré de réactions où ont lieu les réactions gaz solides, un séparateur centrifuge et au moins un échangeur de chaleur de réglage de la température de la chambre de réactions.

Les chaudières comprennent un foyer où est brûlé le combustible, un séparateur centrifuge et au moins un échangeur de chaleur de réglage de la température de la chambre de réactions.

Pour simplifier, on ne décrira dans l'état de la technique de la présente demande que le cas de la chaudière à lit fluidisé circulant.

Le combustible circule dans un lit fluidisé constitué de particules en suspension dans l'air. La fluidisation entraîne les particules vers le haut du foyer ou de la chambre de réactions où elles sont évacuées vers un séparateur centrifuge de section circulaire qui permet de séparer les particules des fumées. La vitesse des fumées est de 3 à 6,5 m/s dans le foyer et de 4 à 6,5 m/s dans l'axe du séparateur. La charge en particules solides dans les fumées peut atteindre 20kg/Nm³ et la granulométrie des particules en circulation est inférieure à 500µ.

Le séparateur centrifuge comprend une chambre verticale à tourbillon qui possède des parois verticales, au moins un orifice d'admission pour recevoir les fumées à épurer et disposé dans la partie haute du séparateur, au moins un orifice d'évacuation pour les fumées épurées et au moins un orifice d'évacuation pour les particules séparées disposé dans la partie basse du séparateur et relié au bas du foyer. L'orifice d'évacuation des fumées épurées est placé en partie haute du séparateur soit au-dessus de la zone où les particules sont séparées.

Les parois du séparateur se resserrent vers le bas afin de canaliser les particules captées vers l'orifice d'évacuation inférieure. Selon la forme du séparateur cette partie basse est de forme conique.

Une partie des particules captées est refroidie par leur passage dans un circuit parallèle de refroidissement et réintroduites dans le bas du foyer ou de la chambre de réactions où elles recommencent un nouveau cycle afin de maintenir un lit fluidisé dans le foyer ou la chambre de réactions, l'autre partie des particules est réintroduite directement dans le bas du foyer ou de la chambre de réactions. Ce circuit constitue la boucle solides chambre de réactions.

Afin de réduire le taux de SO₂ émis, des particules de calcaire sont Introduites dans le lit fluidisé circulant. Cependant ces particulos ne sont que partiellement sulfatées à chaque passage dans le foyer ou de la chambre de réactions. Il faut donc s'assurer qu'elles restent le plus longtemps possible dans le lit fluidisé circulant.

Les fumées sont évacuées à l'atmosphère après un passage dans une suite d'échangeurs situés dans une cage arrière de la chaudière où elles sont refroidies.

Le contrôle de la température du foyer ou de la chambre de réactions peut être effectué par des échangeurs à lits fluidisés situés dans des lits extérieurs tubés ou non et pouvant être accolés au bas du foyer ou de la chambre de réactions. Les échangeurs situés dans le foyer ou la chambre de réactions sont des échangeurs en L ou en U et/ou des panneaux de tubes oméga.

Les particules qui circulent dans la boucle solides chambre de réactions sont très érosives pour les parois des certains éléments du circuit, tel que le bas foyer ou la chambre de réactions, le séparateur, la gaine d'entrée et la gaine de retour des solides, ce qui nécessite de couvrir les parois d'une épaisseur importante de matériau réfractaire. Ceci entraîne une augmentation importante du coût de fabrication de la chaudière et une augmentation significative du poids suspendu. L'augmentation du poids suspendu oblige à prévoir des charpentes renforcées pour soutenir ces éléments. Ces matériaux réfractaires ont une inertie thermique importante qui augmente le temps de chauffage et de refroidissement de la chaudières, lors des arrêts et des redémarrages.

Il est aussi possible de réaliser certaines parois du séparateur en tubes parallèles reliés entre eux par des ailettes, les tubes sont traversés par un fluide caloporteur tel que de l'eau et/ou de la vapeur et constituent ainsi des surfaces de refroidissement. Les parois ainsi refroidies permettent de réduire l'épaisseur de la couche matériau réfractaire nécessaire. Cependant la réalisation de ces parois pour une géométrie circulaire du séparateur est complexe et coûteuse. En effet, la circulation de l'eau dans les parois nécessite une multitude de tubes d'alimentation d'évacuation et de raccords.

Par ailleurs, l'arrangement de la boucle solide chambre de réactions avec des éléments indépendants reliés entre eux par des gaines dans lesquelles circulent les solides ou les gaz présente un encombrement et un poids important.

On a donc cherché à optimiser ce type d'installation en créant des parois planes pour le séparateur centrifuge de section distinctement non circulaire comme dans les brevets EP 481 438 et EP730 910. Cette solution permet d'utiliser une couche mince matériau réfractaire sur la paroi du séparateur et donc d'en réduire le poids. Cette solution permet également de créer un module qui peut être reproduit quand on souhaite augmenter la puissance dé l'installation. Cependant ce type de solution n'est pas satisfaisant car les fumées entrent dans le séparateur centrifuge par un orifice qui ne permet pas d'accélérer suffisamment les particules et les gaz contenus dans lesdites fumées. Leur vitesse étant insuffisante, la séparation des particules se fait difficilement dans le séparateur. Ce qui entraîne une déperdition dos particules du lit dans les fumées évacuées à la sortie du séparateur. Ce qui est très défavorable du point de vue du transfert de chaleur dans le foyer, du taux de la sulfatation des fines particules de chaux dans le foyer et de l'oxydation des fines particules de carbone dans le foyer ou la chambre de réactions. Les fines particules sont rejetées dans l'atmosphère avant une quasi totale sulfatation ou oxydation.

On a alors proposé, comme dans la demande EP 1 308 213 A du demandeur, d'utiliser les parois de la cage arrière comme parois communes de refroidissement au foyer ou à la chambre de réactions d'une part et au séparateur centrifuge d'autre part afin de pouvoir placer une gaine d'accélération entre le foyer ou la chambre de réactions et le séparateur. Cet ensemble constitue un module de base. Cette gaine d'accélération permet de faire passer les fumées de 15-20 m/s en entrée de gaine à 25-35 m/s en sortie de gaine et ce qui permet de mettre en vitesse les particules solides afin de mieux les séparer par effet centrifuge et de provoquer une pré-séparation des particules contenues dans les fumées sur les parois de la gaine. Une autre caractéristique fondamentale réside dans la forme pyramidale de la partie basse du séparateur, cette forme en tronc de pyramide permet d'éviter de faire rebondir l'écoulement en tourbillon des fumées sur une des parois de la partie basse. Cependant cette configuration du module de base oblige à placer le foyer (ou la chambre de réactions), le séparateur et la cage arrière en angle droit, le séparateur ayant une paroi commune avec la cage arrière. Lorsque l'on souhaite augmenter la puissance de l'installation, il faut augmenter le nombre de séparateurs, et cette forme du module de base ne permet pas de réaliser facilement des assemblages impairs à partir de trois séparateurs.

La présente invention est à la fois simple et économique tout en restant modulaire quel que soit le nombre de séparateurs désirés et permettant une excellente séparation des particules dans le séparateur, elle permet une augmentation facile de capacité, une augmentation maximum de surfaces de parois communes, une diminution des réfractaires utilisés, des joints d'expansion, de poids, des charpentes, de l'encombrement, tout en améliorant les temps de chauffage, de refroidissement et la circulation des particules dans le circuit et en réduisant la maintenance. Elle permet également une pré-séparation des particules dans le haut de la chambre de réactions. L'invention permet simultanément d'obtenir d'excellentes performances de séparation du séparateur et donc un meilleur taux de recirculation interne des particules fines, d'où une augmentation du temps de séjour des particules, une diminution des réactifs n'ayant pas réagi et pour les chaudières, une augmentation du taux de sulfatation du calcaire introduit ce qui permet de réduire la quantités de calcaire introduit. L'augmentation de la recirculation interne des particules permet aussi une augmentation des coefficients d'échange dans la partie supérieure de la chambre de réactions et la forte teneur en fines particules en circulation dans le lit réduit son caractère érosif. La fraction des cendres volantes s'échappant du séparateur est réduite, ce qui diminue l'érosion, l'encrassement et les émissions secondaires de CO par les échangeurs de chaleur de la cage arrière en aval du séparateur.

Un réacteur à lit fluidisé circulant comprenant une chambre de réactions reliée par une gaine d'accélération à un séparateur centrifuge pour séparer des particules à partir de gaz chauds venant de ladite chambre de réactions, la gaine d'accélération étant disposée au moins en partie dans le haut de la chambre de réaction est connu du document EP 559 368 A. Le placement de la gaine d'accélération dans la chambre permet un écoulement horizontal centrifuge des fumées au sommet de la chambre qui fait passer les particules d'environ 6m/s vertical à 16m/s horizontal. Cette solution permet de réduire la distance entre la chambre de réactions et le séparateur tout en permettant d'utiliser une gaine d'accélération qui améliore les performances de séparation du séparateur. Elle permet aussi d'utiliser les tubes de la chambre de réactions comme parois de la gaine à la fois sur le coté extérieur, appelé aussi extrados, et sur le plafond. La chambre de réactions assure également le support de la gaine. Cette configuration procure une compacité très élevée puisque la gaine est intégrée en partie à la chambre de réactions.

Les problèmes de l'art antérieur sont résolus, selon la présente invention, par un réacteur à lit fluidisé circulant avec les caractéristiques de la revendication 1. Des autres caractéristiques particulières sont divulguées dans les revendications dépendantes.

Selon l'invention, la gaine d'accélération est disposée en totalité dans la haut de la chambre de réactions. Si l'on souhaite réduire au maximum la distance entre la chambre et le séparateur, il suffit d'intégrer la gaine d'accélération tout entière dans la chambre de réactions.

Selon l'invention, la gaine d'accélération comporte une bouche d'entrée sensiblement parallèle à l'extrados de la gaine. Les deux parties de la gaine forment un angle. Cette configuration est plus facile à construire. Le plancher de la gaine représente la totalité de la largeur de la paroi de Ja chambre de réactions parallèle à l'extrados de la gaine et pouvant constituer ledit extrados.

Selon une caractéristique particulière de l'invention, le séparateur centrifuge présente en section transversale des parois verticales sensiblement rectilignes.

Selon une autre caractéristique particulière, le séparateur centrifuge comporte une paroi commune avec la chambre de réactions. Les parois du séparateur étant rectilignes tout comme celles de la chambre de réactions, elles peuvent être jointives. Cette paroi peut être simple ou double.

Selon une caractéristique particulière de l'invention, le séparateur centrifuge comporte une paroi commune avec la cage arrière. Afin de réduire encore les coûts de fabrication du réacteur, on fusionne les deux parois en une seule. La liaison entre les sorties du séparateur et la cage arrière sont réalisées de façon conventionnelle tubée ou non. L'extrême compacité de la configuration permet de minimiser la longueur des ces gaines de liaison, voire de ne conserver qu'un simple plénum de liaison. On entend par plénum dans ce cas, le prolongement des parois du séparateur et de la cage arrière qui constituent alors une prolongation vers le haut desdits éléments et qui servent de conduits par une ouverture dans la paroi commune.

Selon une caractéristique particulière; le chambre de réactions comporte une paroi commune avec la cage arrière. Dans cette configuration en équerre, le chambre de réactions est placée entre le séparateur et la cage arrière.

La disposition des différents éléments conduit à augmenter la compacité du réacteur et permet ainsi de réaliser facilement le cas échéant des réacteurs sous prossion. Le rapport entre les parois rapprochées, c'est à dire dont la distance est inférieure à 15% de la plus grande des dimensions de la section horizontale de la chambre de réactions, et les parois isolées est maximisé.

Selon une autre caractéristique particulière, l'ensemble constitué de la chambre de réactions, du séparateur et de la cage arrière constitue un module de base aligné ou en équerre selon la variante retenue. Un module ainsi constitué peut fournir une puissance maximum de 100MWe pour une chaudière.

Ainsi dans la variante alignée, avec un module de base de 100MWe, on peut par exemple réaliser des chaudières de 100MWe à 500MWe en accolant les modules et de 200MWe à 1000MWe en doublant le nombre de modules par symétrie du premier module.

Par exemple, dans la variante en équerre et pour un module de base de 100MWe, on double le module de base par symétrie par rapport au plan chambre de réactions cage arrière, puis on juxtapose de façon multiple ce nouveau sous-ensemble si on veut réaliser des chaudières de 100MWe à 1000MWe.

Pour les configurations avec séparateur de part et d'autre en symétrie de la chambre de réactions, on peut simplifier l'ensemble réalisé en ne prévoyant qu'une seule cage arrière disposée d'un coté et relié aux sorties des séparateurs de l'autre coté de façon conventionnelle par des gaines de liaisons tubées ou non et situés ou non au-dessus de la chambre de réactions. Dans le cas où les gaines de liaison seraient situées au-dessus de la chambre de réactions, elles constituent ainsi une extension de la chambre de réactions. Le plafond de la chambre de réactions peut donc former le plancher de ces gaines de liaison et les parois verticales de ces gaines sont alors dans la continuité des parois verticales de la chambre de réactions et supportent alors le poids de ces parois.

Selon une caractéristique particulière la chambre de réactions et le séparateur ont des parois extérieures alignées. Ainsi l'extérieur du module ou de l'ensemble des modules de base symétrisés et/ou juxtaposés, a des parois latérales extérieures plantes donc alignées coté chambre de réactions et séparateur.

Selon une autre caractéristique particulière, la puissance du réacteur est fonction du nombre des modules utilisés. Si l'on souhaite obtenir une puissance déterminée, il suffit de multiplier le nombre de module par le coefficient obtenu en divisant la puissance désirée par la puissance du module de base. Dans ces modules, il est possible de regrouper la partie chambre de réactions de chacun des modules pour constituer une seule chambre de réactions. De la même façon, la partie cage arrière de chaque module peut être regroupée en une seule cage.

Selon une caractéristique particulière, deux modules adjacents comprennent au moins une paroi commune. La configuration particulière du module de base permet de facilement construire le réacteur, en effet comme ses cotés sont rectilignes, on peut facilement juxtaposer deux ou plusieurs modules de base.

Selon une autre caractéristique, la paroi commune à deux modules et placée entre deux séparateurs est partielle. Cette paroi peut être coupée en totalité ou en partie soit verticalement, soit horizontalement, soit comporter des orifices. Les deux séparateurs des modules de base voisins comportent une paroi qui part de la partie haute du séparateur et qui s'arrête à une certaine distance du haut, et au plus bas dans la zone de rétrécissement du séparateur correspondant à l'évacuation des particules. Cette paroi est droite sans rétrécissement vers le bas, elle est ainsi plus simple donc plus facile à réaliser. Pour des raisons d'équilibrage de pression interne entre séparateurs adjacents (orifice d'évacuation bouché par exemple), il peut s'avérer nécessaire que la paroi commune comporte des ouvertures voire pas de paroi du tout.

Selon une autre caractéristique particulière, les chambres de réaction de deux modules adjacents sont réunies. La chambre de réactions est unique quel que soit le nombre de modules de base utilisés, mais sa taille est définie par le nombre de modules utilisés.

Selon une autre caractéristique particulière, les cages arrière de deux modules adjacents sont réunies. La cage arrière est unique quel que soit le nombre de modules utilisés, sa taille peut donc être plus petite que celle définie par le nombre de modules utilisés. Dans le cas où les modules sont disposés par symétrie par rapport à la chambre de réactions, une seule cage arrière est prévue d'un des cotés et les gaines de liaisons passent alors au-dessus de la chambre.

Selon une caractéristique particulière, une des parois de la chambre de réactions comporte au moins un déflecteur d'entrée de la gaine d'accélération. Afin de faciliter l'entrée des particules et des fumées dans la gaine un déflecteur est disposé de façon appropriée.

Selon une caractéristique particulière, les parois sont tubées. Le fait qu'elles soient rectilignes facilite leur réalisation et donc leur coût. Ainsi lés parois de la gaine d'accélération, du séparateur, y compris la partie basse, et de la chambre de réactions sont tubées.

Selon une autre caractéristique particulière, les parois de la gaine d'accélération, du séparateur, le bas et le haut de la chambre de réactions sont recouvertes d'une couche de matériau réfractaire. La température et l'érosivité des particules circulant dans les différents éléments nécessite l'utilisation d'une couche de matériau réfractaire qui peut être moins épaisse quand les .parois sont refroidies, ce qui permet de réduire le poids, car ces matériaux sont assez lourds. La couche de réfractaire est ainsi beaucoup plus faible sur les parois de la gaine d'accélération, du séparateur et du bas et du haut chambre de réactions dans la zone de la gaine que la solution traditionnelle non tubée.

Selon une caractéristique particulière, les parois de la partie de la gaine d'accélération située dans le haut chambre de réactions utilisent des tubes pris dans les parois de la chambre de réactions. Dans ce cas les tubes pris en dérivation dans les parois de la chambre de réactions sont dans la continuité des circuits eau/vapeur de refroidissement de ces parois. Par exemple, une partie des tubes d'une des parois de la chambre de réactions sont déviés vers l'intérieur de la chambre de réactions afin de former d'abord le plancher de la gaine, puis dans la continuité la paroi verticale située dans la chambre de réactions, soit l'intrados de la gaine. L'extrados de la gaine est formé par les tubes non déviés restant de la paroi de la chambre de réactions. Le plafond de la gaine peut être formé par le plafond de la chambre de réactions. Si le plancher de la gaine nécessite d'être renforcé, plusieurs rangées de tubes peuvent être disposées. Des tubes déviés forment d'abord une première rangée puis une deuxième rangée superposée et reliée à la première afin de donner au plancher l'inertie suffisante et revenir prendre leur place dans la paroi de la chambre de réactions. Le tube forme ainsi un aller retour sous le plancher de la gaine. Les tubes utilisés pour former les parois de la gaine peuvent être soit ceux de l'enveloppe extérieure de la chambre de réactions soit des parois internes de séparation de la chambre de réactions. Le chambre de réactions porte ainsi la gaine d'accélération.

Selon une autre caractéristique, les parois de la partie de la gaine d'accélération située dans la chambre de réactions utilisent des tubes pris dans les parois du séparateur. La gaine située dan la chambre de réactions peut ainsi être constituée de tubes de la chambre et/ou de tubes du séparateur.

Selon une caractéristique particulière, les parois de la gaine d'accélération sont constituées de tubes formant un circuit distinct. Les tubes de la gaine sont indépendants de ceux des parois de la chambre de réactions te des parois du séparateur.

Selon une autre caractéristique particulière, les parois de la gaine sont réalisées en utilisant des tubes des parois de la chambre de réactions et du séparateur. Une partie de la paroi est réalisée avec les tubes provenant de la chambre de réactions et l'autre partie de ceux provenant du séparateur en proportion quelconque, on optimise ainsi les deux circuits.

Selon une autre caractéristique particulière, le déflecteur est formé par des tubes déviés venant des parois de la chambre de réactions. Le coin de la chambre de réactions où est placé le déflecteur est arrondi ou biseauté pour constituer un réflecteur et donc les tube constituant les parois de la chambre de réactions sont déviées pour constituer ledit déflecteur.

Selon une autre caractéristique particulière, un déflecteur est formé par un arrondi des tubes du plancher de la gaine. De cette façon, les tubes du plancher de la gaine constituée de dérivation des parois de la chambre de réactions, et/ou du séparateur, et/ou d'un circuit distinct, peuvent former un arrondi ou un biseau sous ledit plancher et ainsi constituer le déflecteur.

Selon une autre caractéristique particulière, le plancher de la gaine possède au moins une inclinaison vers le séparateur. Le plancher présente une pente dirigée vers le séparateur afin de guider les particules qui se sont déposées vers le séparateur.

Selon une autre caractéristique particulière, le plancher de la gaine possède au moins une inclinaison vers l'extrados de la gaine. Afin de favoriser la séparation des particules le plancher est incliné vers l'extrados de la gaine, soit sur une paroi qui est dans le prolongement de la face de captation des solides dans le séparateur.

Selon une caractéristique particulière, les parois extérieure et intérieure de la gaine présentent plusieurs changements de section. Ces changements de section permettent d'optimiser la vitesse des particules.

Le contrôle de la température de la chambre de réactions peut être effectuée par des échangeurs à lits fluidisé situés dans des lits extérieurs tubes ou non et pouvant être accolés au bas de la chambre de réactions. Les échangeurs situés dans la chambre de réactions sont des échangeurs en L, et/ou en U, et/ou des panneaux oméga.

Selon une variante particulière de l'invention, l'évacuation des gaz du séparateur centrifuge se fait par un conduit vertical situé à l'intérieur dudit séparateur et qui dirige les gaz vers le bas du séparateur. Le conduit pourra être couvert de réfractaire à la fois à l'intérieur et à l'extérieur. Le conduit pourra être tubé ou non. La sortie des gaz étant effectuée par le bas le conduit ne dépasse pas au dessus du séparateur ce qui permet d'avoir une hauteur réduite pour l'ensemble et de pouvoir éventuellement poser ladite cage arrière sur le sol. Cette construction permet de réduire le nombre de collecteur des échangeurs et les longueurs de tuyauteries associées.

Selon une autre caractéristique de la variante particulière, le conduit est placé au milieu du séparateur. La position centrale permet une meilleur circulation des particules et des fumées. La place prise sur la section du séparateur devra être compensée par une augmentation de la section horizontale du séparateur afin que la place laissée à la circulation des particules soit identique à la solution d'évacuation des gaz par le haut de façon classique. Si on est limité par la taille du chambre de réaction, il faut alors élargir la section par l'arrière en utilisant une section rectangulaire.

Selon une caractéristique supplémentaire, un déflecteur est placé en haut du séparateur. Ce déflecteur sert à diriger les gaz vers le conduit central d'évacuation des gaz, il est positionné sensiblement dans l'alignement du conduit d'évacuation.

Selon une caractéristique complémentaire, le déflecteur a une section au moins égale à celle du conduit d'évacuation des fumées, sa position est sensiblement alignée avec celle du conduit d'évacuation et sa hauteur est inférieure à celle de la partie à section constante du séparateur. Il facilite ainsi le passage des gaz vers le conduit d'évacuation.

Selon une autre caractéristique, le séparateur est porté par au moins un des conduits d'évacuation du séparateur. Le conduit vertical d'évacuation des fumées monte au moins jusqu'à la partie conique du séparateur et descend jusqu'à la cage arrière si celle-ci est suffisamment basse le conduit peut servir de pied au séparateur. Le conduit d'évacuation des particules du séparateur descend suffisamment bas pour servir de support au séparateur et comme la cage arrière n'est plus suspendue audit séparateur le poids de celui-ci est grandement réduit.

Selon une autre caractéristique, la cage arrière est horizontale. Comme le séparateur est autoporteur et que l'évacuation des fumées se fait par le bas, la cage arrière n'a plus besoin d'être plus haute que le séparateur, elle peut donc être placée horizontalement et bas. Cette construction permet une récupération fractionnée des métaux lourds contenus dans les cendres. En effet, les métaux lourds se condensent sur les cendres contenues dans les fumées de façon progressive au fur et à mesure du refroidissement des fumées. Les températures de condensation sont spécifique à chaque type de métal. Il est donc possible sous une chaudière horizontale comportant plusieurs trémies pour les cendres sous les appareils suspendus d'extraire des cendres plus ou moins chargées en métaux lourds ce qui peut présenter un avantage pour leur valorisation ultérieure.

Selon une autre caractéristique, la cage arrière est située en dessous du séparateur. Afin d'améliorer la compacité de l'ensemble, il est possible de placer la cage arrière sous le séparateur qui est alors soutenu par ladite cage arrière.

Selon une autre disposition, la cage arrière est posée sur des massifs en béton. L'évacuation des gaz du séparateur se faisant par le bas, la cage arrière pouvant être positionnée bas, il est possible de la poser directement sur le sol sur un massif de soutènement. On peut alors supprimer la charpente métallique qui supporte habituellement ces ensembles, d'où un gain important de coût et de poids de l'ensemble. Ceci présente également l'intérêt de raccourcir les tuyauteries de liaison entre la cage arrière et la turbine ce qui est une source de réduction de coûts supplémentaire. L'ensemble est alors directement supporté sur le sol par un massif en béton ou une structure métallique de soutènément. Il est également possible de suspendre à mi-hauteur l'ensemble, ce qui présente l'avantage de limiter l'utilisation de patins de frottement nécessaires à la solution posée tout en minimisant la charpente métallique. On a ainsi un éventail de choix plus étendu ce qui permet de répondre à plus contraintes venant des clients et donc d'offrir la solution la plus adaptée.

Selon une autre variante, un séparateur secondaire est placé entre le séparateur principal et la cage arrière. Ce séparateur pourra être rond, polygonal ou carré. Ce séparateur secondaire permet d'augmenter la captation des poussières contenues da les fumées afin de pouvoir les réinjecter dans le foyer et d'augmenter leur conversion (soit réduire les imbrûlés solides et la consommation de calcaire) ainsi que de réduire la charge érosive dans la chaudière de récupération.

L'invention sera mieux comprise à la lecture de la description qui va suivre sur une chaudière qui est un type particulier de réacteur, donnée uniquement à titre d'exemple et faite en se référant aux dessins annexés dans lesquels :
- la figure 1 représente une chaudière ou réacteur, avec une gaine comportant une bouche d'entrée perpendiculaire à l'extrados de la gaine et disposée dans la chambre de réactions, qui ne fait pas partie de la présente invention.
- la figure 2 représente une chaudière ou un réacteur selon l'invention en vue de dessus avec une gaine comportant une bouche parallèle à l'extrados de la gaine et disposée dans le loyer,
- la figure 3 est une chaudière ou réacteur en vue du dessus,
- la figure 4 est une chaudière ou réacteur avec deux modules selon l'invention en vue de dessus,
- la figure 5 est une chaudière ou de réacteur avec trois modules en vue de dessus,
- la figure 6 est une chaudière ou de réacteur avec deux modules en vue de dessus.
- la figure 7 est une vue en perspective de la chaudière ou du réacteur selon l'invention avec quatre séparateurs,
- la figure 8 est une vue en élévation de la chaudière ou du réacteur avec lits et siphons intégrés non accolés à la chambre de réactions,
- la figure 9 est une vue en élévation de la chaudière ou du réacteur avec panneaux dans la chambre de réactions,
- la figure 10 est une vue en élévation de la chaudière ou du réacteur avec lits et siphons séparée et accolés,
- la figure 11 est un vue en élévation de la chaudière ou du réacteur selon l'invention,
- la figure 12 est une vue détaillée en élévation de la gaine intégrée selon une première version, qui ne fait pas partie de la présente invention,
- la figure 12a est une vue suivant A de la gaine de la figure 12,
- la figure 12b est une vue de dessus de la gaine de la figure 12,
- la figure 13 est une vue détaillée en élévation de la gaine intégrée selon une deuxième version, qui ne fait pas partie de la présente invention,
- la figure 13a est une vue suivant A de la gaine de la figure 13,
- la figure 13b est une vue de dessus de la gaine de la figure 13,
- la figure 14 est une vue détaillée en élévation du la gaine intégrée selon une troisième version, qui ne fait pas partie de la présente invention,
- la figure 14a est une vue suivant A de la gaine de la figure 14,
- la figure 14b est une vue de dessus de la gaine de la figure 14,
- la figure 15 est une vue détaillée en élévation de la gaine intégrée selon l'invention,
- la figure 15a est une vue suivant A de la gaine de la figure 15,
- la figure 15b est une vue de dessus de la gaine de la figure 15,
- la figure 15c est une vue suivant C de la gaine de la figure 15,
- la figure 16 est une vue détaillée en élévation de la gaine intégrée selon une version de l'invention,
- la figure 16a est une vue suivant A de la gaine de la figure 16,
- la figure 16b est une vue de dessus de la gaine de la figure 16,
- la figure 16c est une vue suivant C de la gaine de la figure 16,
- la figure 17 est une vue détaillée en élévation de la gaine intégrée selon une version de l'invention,
- la figure 17a est une vue suivant A de la gaine de la figure 17,
- la figure 17b est une vue de dessus de la gaine de la figure 17,
- la figure 17c est une vue suivant C de la gaine de la figure 17,
- la figure 18 est une vue détaillée en élévation de la gaine intégrée selon une version de l'invention,
- la figure 18a est une vue suivant A de la gaine de la figure 18,
- la figure 18b est une vue de dessus de la gaine de la figure 18,
- la figure 18c est une vue suivant C de la gaine de la figure 18,
- la figure 19 est une vue en élévation détaillée de la gaine avec partie finale en partie dans le séparateur et en partie entre la chambre de réactions et le séparateur qui ne fait pas partie de l'invention,
- la figure 19a une vue de dessus de la gaine de la figure 10,
- la figure 20 est une vue détaillée en élévation de la gaine avec partie finale dans le séparateur,
- la figure 20a une vue de dessus de la gaine de la figure 20,
- la figure 21 est une vue détaillée en élévation de la gaine avec partie finale dans la chambre de réactions.

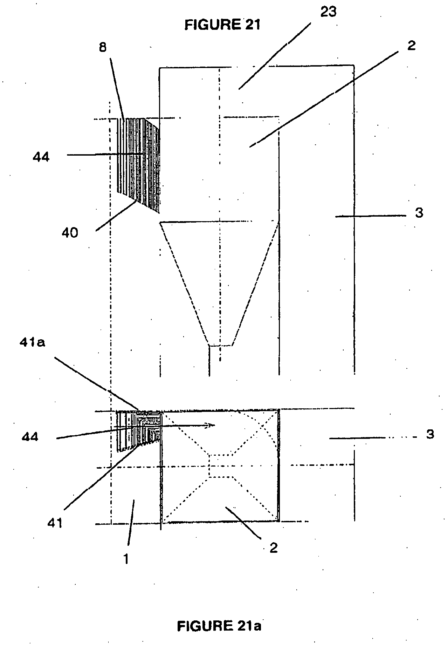

- la figure 21 a une vue de dessus de la gaine de la figure 21,

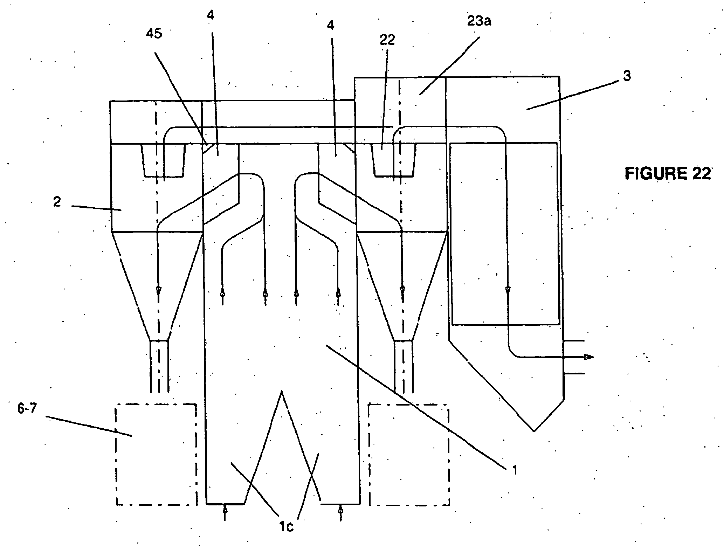

- la figure 22 est une vue en élévation d'une chaudière ou d'un réacteur selon l'invention constituée de deux modules de base,

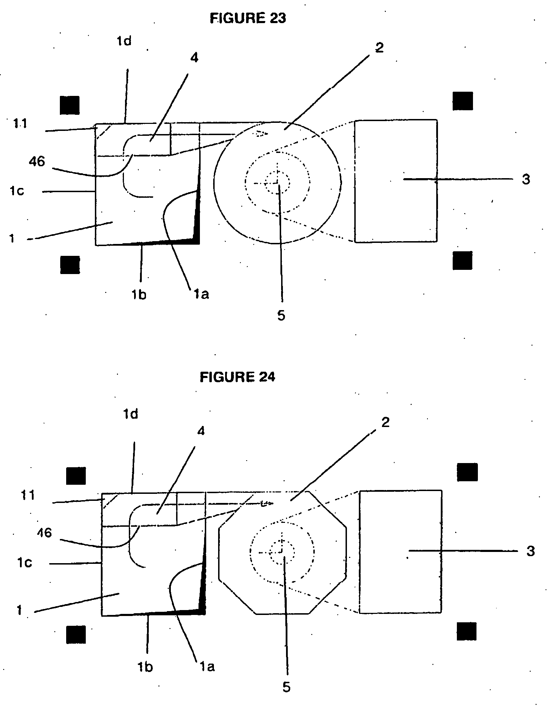

- la figure 23 est une vue de dessus d'une chaudière ou d'un réacteur selon l'invéntion avec un séparateurs de section circulaire,
- la figure 24 est une vue de dessus d'une chaudière ou d'un réacteur selon l'invention avec un séparateur de section polygonale,

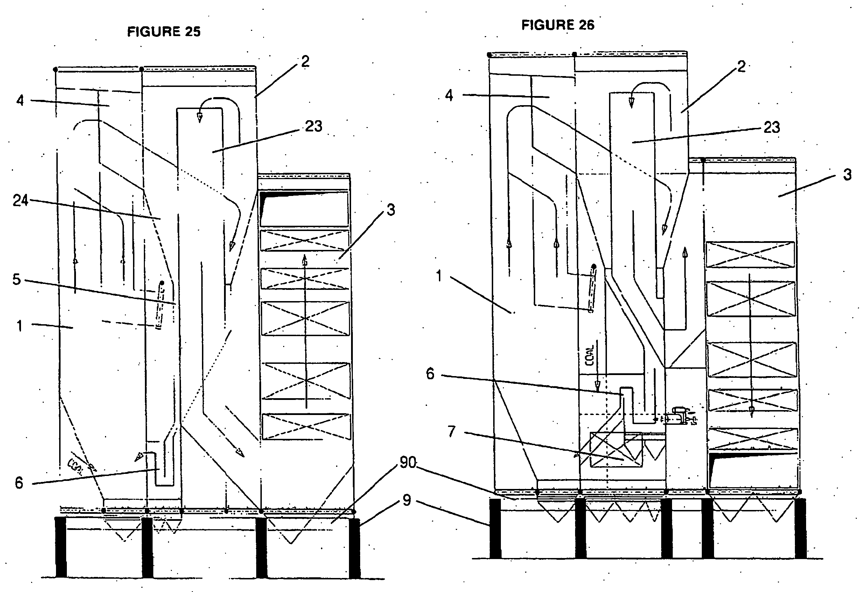

- la figure 25 est une vue en élévation d'une chaudière ou d'un réacteur avec une évacuation des gaz vers le bas et sortie vers le haut de la cage arrière,
- la figure 26 est une vue en élévation d'une chaudière ou d'un réacteur avec évacuation des gaz vers le bas et sortie vers le bas de la cage arrière,

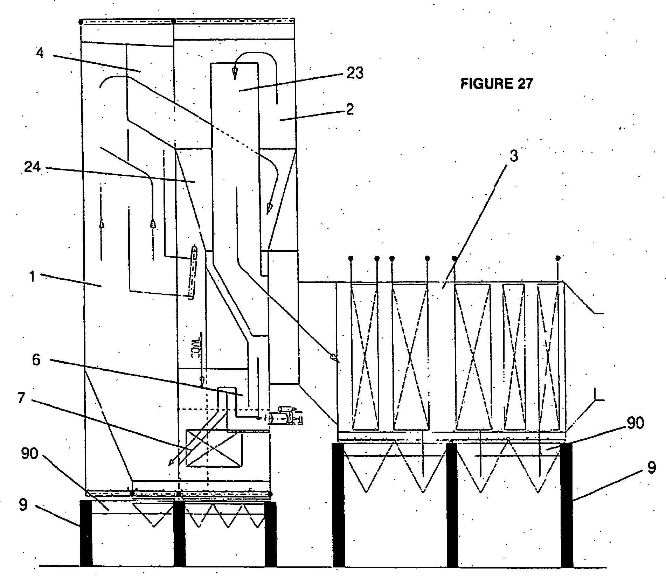

- la figure 27 est une vue en élévation d'une chaudière ou d'un réacteur avec évacuation des gaz vers le bas et cage arrière horizontale à mi-hauteur,

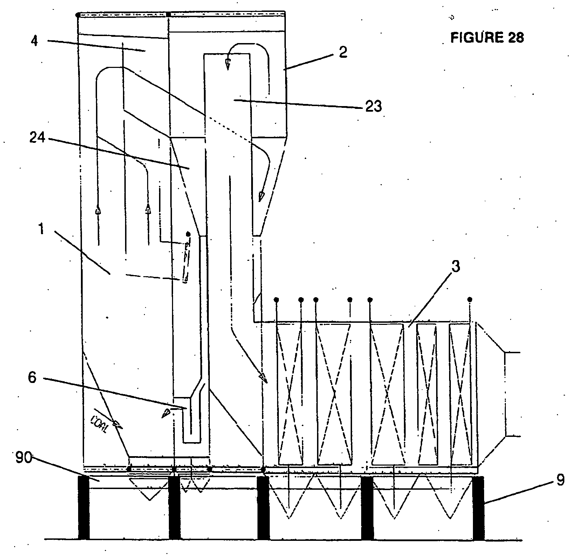

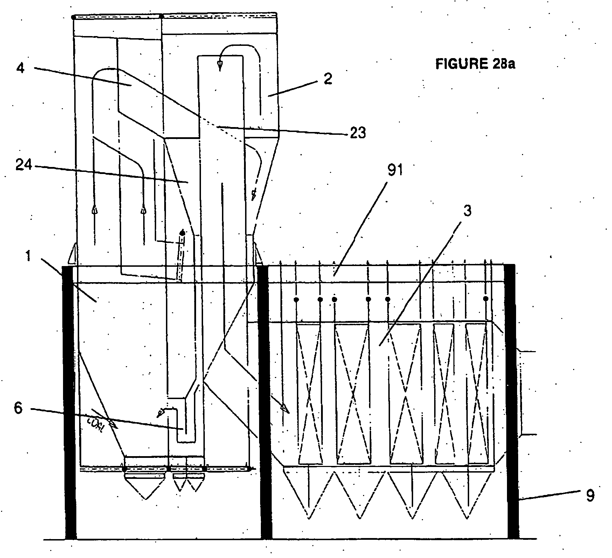

- la figure 28 est une vue en élévation d'une chaudière ou d'un réacteur avec évacuation des gaz vers le bas et cage arrière horizontale en position basse,
- la figure 28a est une vue en élévation d'une chaudière ou d'un réacteur avec évacuation des gaz vers le bas et cage arrière horizontale en position basse et supporté à mi-hauteur du réacteur,

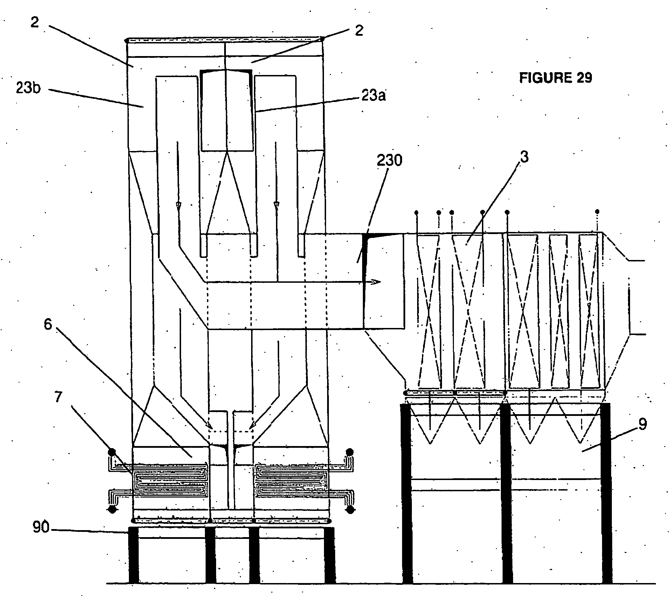

- la figure 29 est une vue en élévation d'une chaudière ou d'un réacteur avec évacuation des gaz vers le bas et cage arrière horizontale à mi-hauteur commune à deux séparateurs,

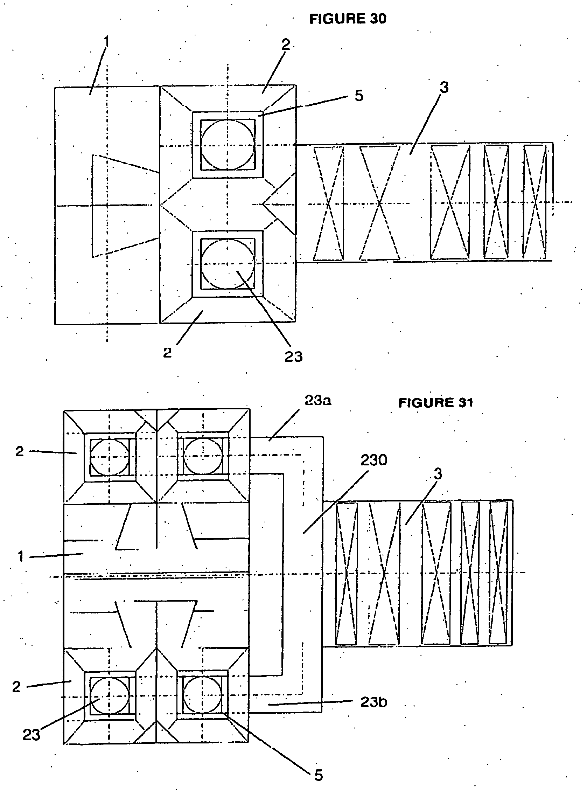

- les figures 30 et 31 sont des vues de dessus d'une chaudière ou d'un réacteur avec cage arrière commune à un ou deux chambres de réactions.

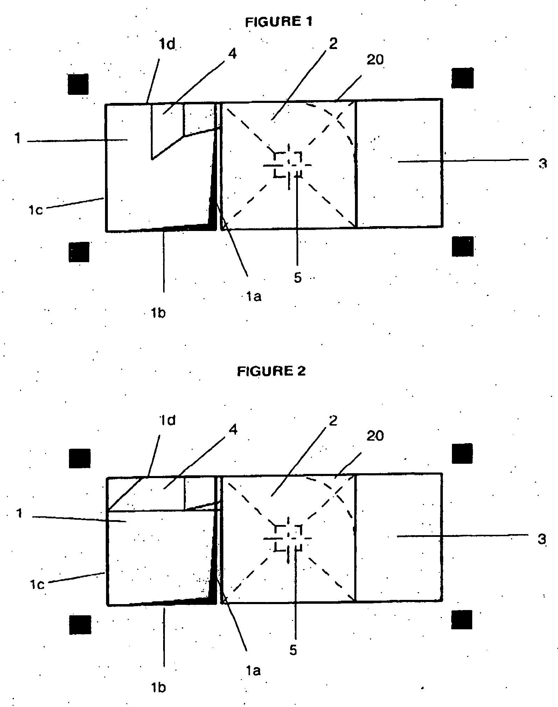

La chaudière ou le réacteur selon l'invention est constituée d'une chambre de réactions 1, d'un séparateur 2 et d'une cage arrière 3, comme on le voit à la figure 1. Dans la première variante (fig. 1), ces trois éléments sont alignés. Une gaine 4 relie la chambre de réactions 1 au séparateur 2.

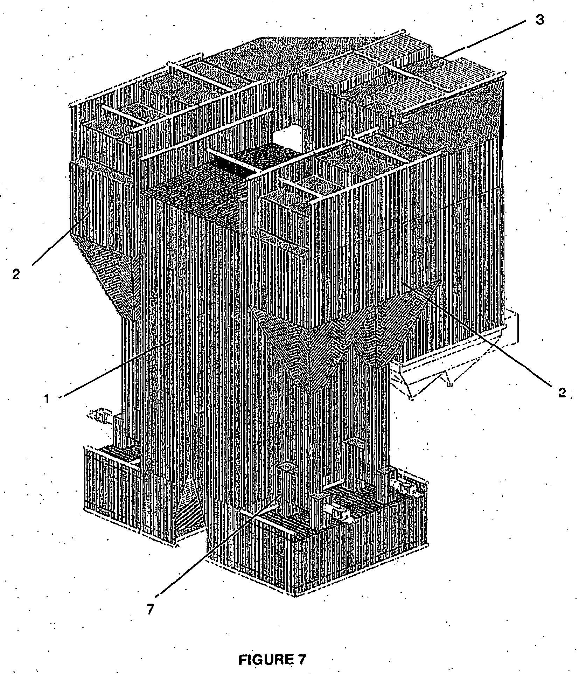

Le séparateur 2 comporte une évacuation 5 pour les particules. Selon l'invention le séparateur 2 peut être de forme classique ronde (figure 23), de forme polygonale (figure 24) ou de forme carrée (figures 1 à 7 et 12 à 21).

Comme montré sur la figure 1, un déflecteur 20 arrondi est placé en face de l'entrée des fumées dans le séparateur 2.

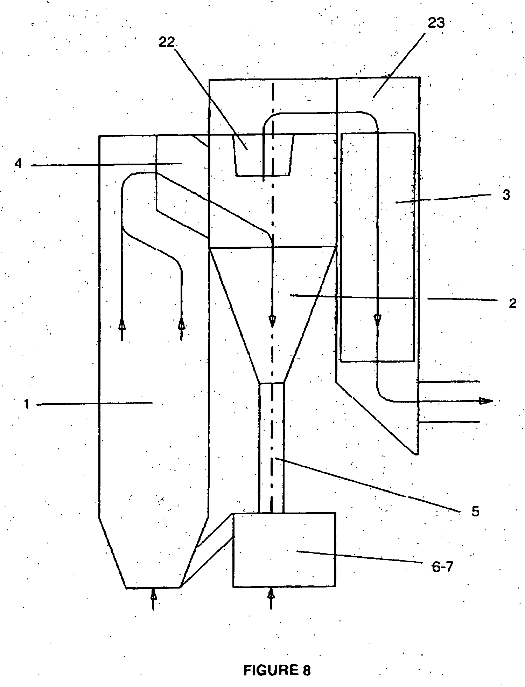

Les gaz sont évacués par un orifice 22 situé en partie haute du séparateur 2 (figures 8 à 11).

La gaine 4 de la figure 1, qui ne fait pas partie de la présente invention, présente une bouche d'entrée 46 perpendiculaire à la paroi 1d tandis que celle de l'invention, figure 2, est parallèle à ladite paroi 1d. L'entrée de la gaine 4 est dans le prolongement de la gaine 4 dans le premier cas, et perpendiculaire à l'axe de la gaine 4 dans le deuxième.

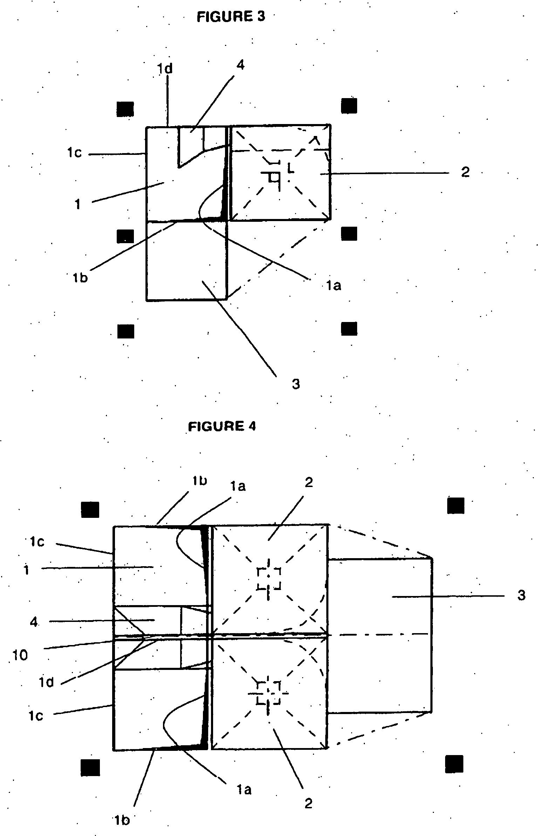

Dans la variante de chaudière, ou de réacteur, présentée à la figure 3, le séparateur 2 est placé sur un des cotés 1a de la chambre de réactions 1, tandis que la cage arrière 3 est située sur le coté 1b adjacent au précédent.

La figure 4 montre une chaudière, ou un réacteur, constituée de deux modules identiques à ceux présenté on figure 2 et juxtaposés. On peut doubler la capacité de la chaudière ou du réacteur en doublant le module de la figure 4 par symétrie par rapport à la chambre de réaction.

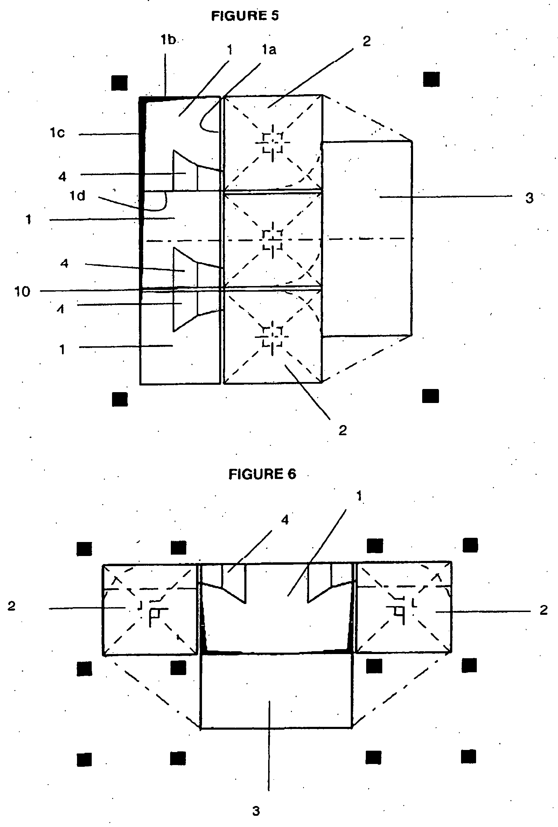

La figure 5 représente une chaudière, ou un réacteur, constituée de trois modules de la première variante alignés cote à cote. Ici encore, il est possible de doubler la capacité de la chaudière, ou du réacteur, en doublant les modules par symétrie. Les chambre de réactions 1 de chaque module peuvent être regroupées en un seul chambre de réactions avec une séparation 10 positionnée en partie haute seulement. Cette séparation 10 est tubée et sert de support à la (ou les) gaine(s) d'accélération 4 mitoyenne(s). La cage arrière 3 est dimensionnée pour trois séparateurs 2, sa longueur est inférieure à la somme des longueurs des trois séparateurs 2, comme on le voit à la figure 5.

La figure 6 montre une chaudière, ou un réacteur, constituée de deux modules de la deuxième variante face à face. Dans cette configuration, les deux chambres de réaction 1 du module sont réunis pour ne former qu'une seule chambre de réactions, et les deux cages arrières 3 du module également.

La chaudière ou le réacteur, quelle que soit la variante, peut comporter des siphons 6 et/ou des lits extérieurs 7, qui sont intégrés ou non et/ou accolés ou non à la chambre de réaction. Cela constitue environ 5 configurations possibles, dont seules trois sont représentées.

Selon une première configuration représentée à la figure 8, les lits 7 et les siphons 6 sont intégrés mais non accolés à la chambre de réactions 1.

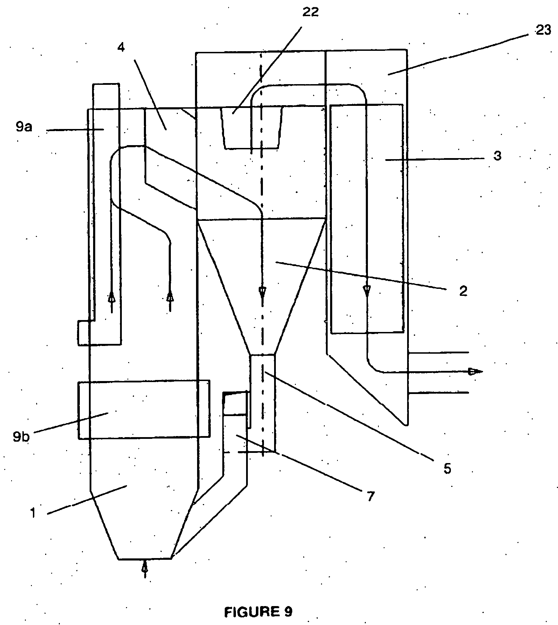

Selon une deuxième configuration représentée à la figure 9, le siphon 7 est séparé et non accolé à la chambre de réactions 1. Des panneaux d'échange 9a et 9b sont disposés dans la chambre de réactions 1.

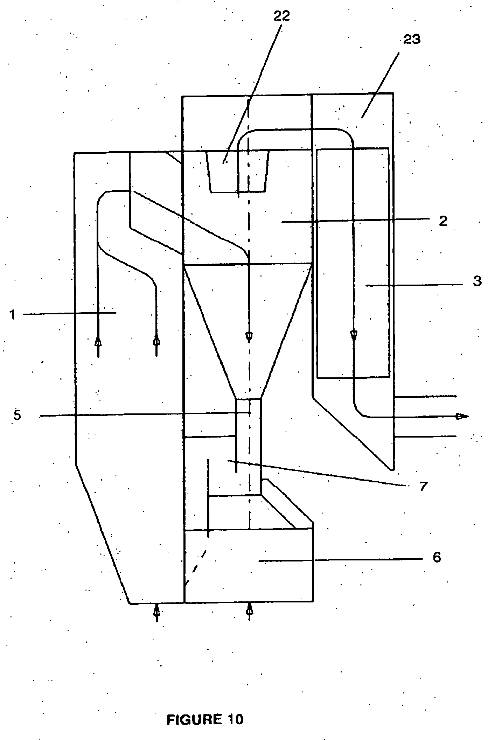

Selon une troisième configuration représentée à la figure 10, les lits 7 et les siphons 6 sont séparés et accolées à la chambre de réactions 1.

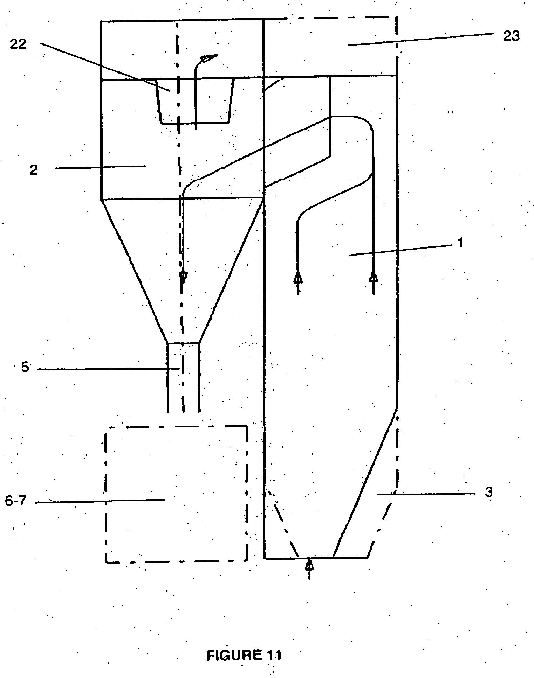

Dans la deuxième variante de la chaudière représentée à la figure 11, l'ensemble de ces configurations des lits 7 et des siphons 6 sont possibles.

La gaine 4 peut se présenter suivant plusieurs formes.

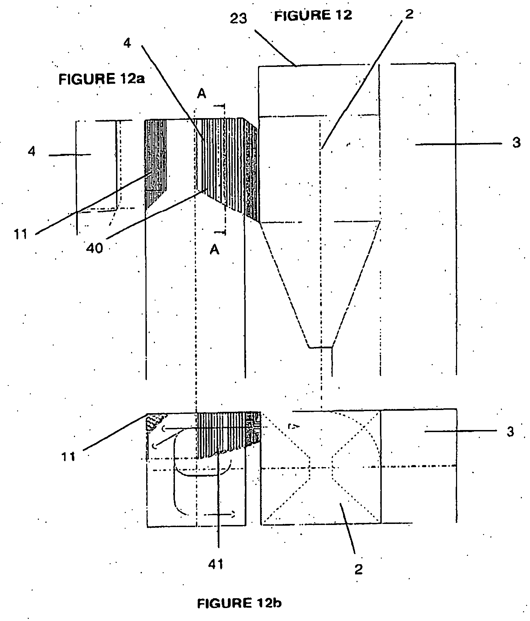

Selon les figures 12, 13, 14, qui ne font pas partie de l'invention la gaine 4 intégrée dans la chambre de réactions 1 est rectiligne avec une entrée dans le prolongement de l'axe de la gaine 4 et de section sensiblement rectangulaire. Le plancher 40 est légèrement incliné vers l'extérieur de la chambre de réactions 1 (figures 12a, 13a, 14a) afin de diriger les particules vers la face 41a de la gaine 4 qui est dans le prolongement de la face 21 de captation des solides dans le séparateur 2.

Le plancher 40 de la gaine 4 est incliné de l'intérieur de la chambre de réactions 1 vers l'extérieur (cf. figure 12) et de l'entrée de la gaine vers le séparateur 2. La paroi intérieure 41 de la gaine 4 converge vers le séparateur 2 (cf. figure 12b).

Un déflecteur 11 est placé dans le haut de la chambre de réactions 1 en vis à vis de l'entrée de la gaine 4 (figures 12, 13, 14), afin de faciliter l'entrée des particules dans la gaine 4. Une variante non représentée peut ne pas comprendre ce déflecteur 11.

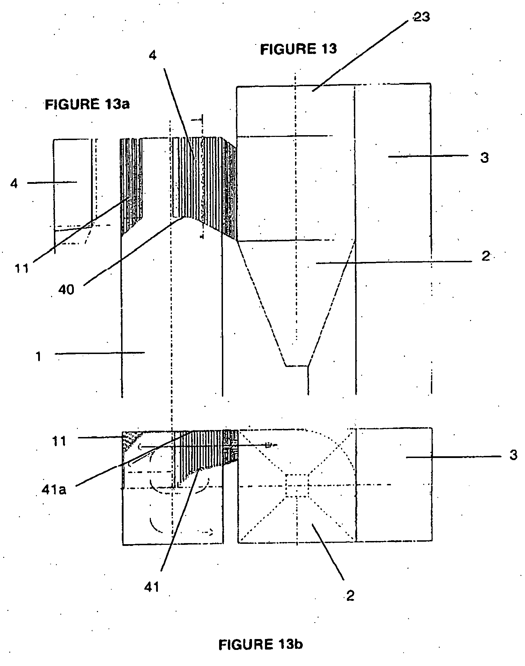

Selon une deuxième disposition représentée a la figure 13, la gaine 4 présente des changements de section. Le plancher 40 est tout d'abord horizontal comme on le voit à la figure 13, puis il prend une pente inclinée vers le séparateur 2. La paroi intérieure 41 présente un changement de section (cf. figure 13 b). La gaine 4 est ainsi de plus en plus étroite vers le séparateur 2, ce qui permet une bonne accélération des particules et des fumées et donc une meilleure séparation des particules des gaz.

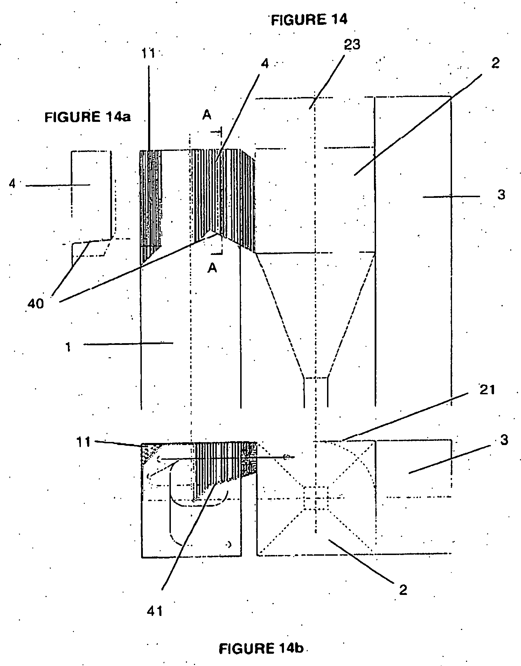

Selon une troisième disposition, le plancher 40 de la gaine 4 est d'abord dirigée vers le haut de la chambre de réactions 1 afin de réduire sa section, puis vers le bas, comme représenté à la figure 14. La paroi 41 présente un changement de section (cf. figure 14b) comme dans la disposition précédente (figure 13b).

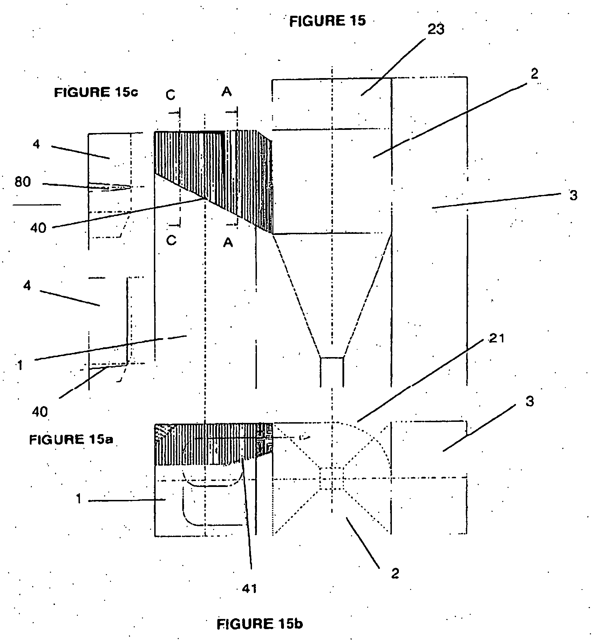

Dans les figures 15 à 18, l'entrée de la gaine 46 est alors perpendiculaire à l'axe de la gaine 4.

Comme dans le cas précédent, la section de la gaine avec une bouche d'entrée parallèle à l'extrados de la gaine est sensiblement rectangulaire avec une légère pente vers l'extérieure (figures 15a, 16a, 17a, 18a) dans la zone 43 de la gaine 4.

Selon une première disposition représentée à la figure 15 le plancher 40 est en pente vers le séparateur 2. Le plancher 40 est légèrement incliné vers l'extérieur de la chambre de réactions 1 (figures 15a, 16a, 17a, 18a) afin de diriger les particules vers la face 41a de la gaine 4 qui est dans le prolongement de la face 21 de captation des solides dans le séparateur 2. Le plancher 40 peut être arrondi vers la paroi de la chambre de réactions afin de constituer un déflecteur (non représenté).

La paroi 41 converge vers le séparateur 2 (cf. figures 15b, 16b; 17b, 18b) afin d'accélérer les particules et les fumées.

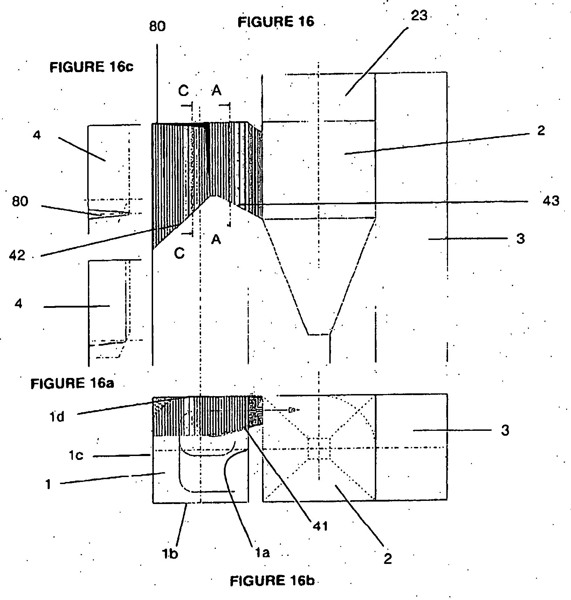

Selon une deuxième disposition représentée à la figure 16 le plancher 40 est tout d'abord dirigé vers le haut dans la zone 42 correspondant à l'entrée de la gaine 4. Cette disposition favorise l'entrée des particules et des gaz dans la gaine 1. Dans la zone suivante 43, le plancher est dirigé vers le bas comme dans la disposition précédente.

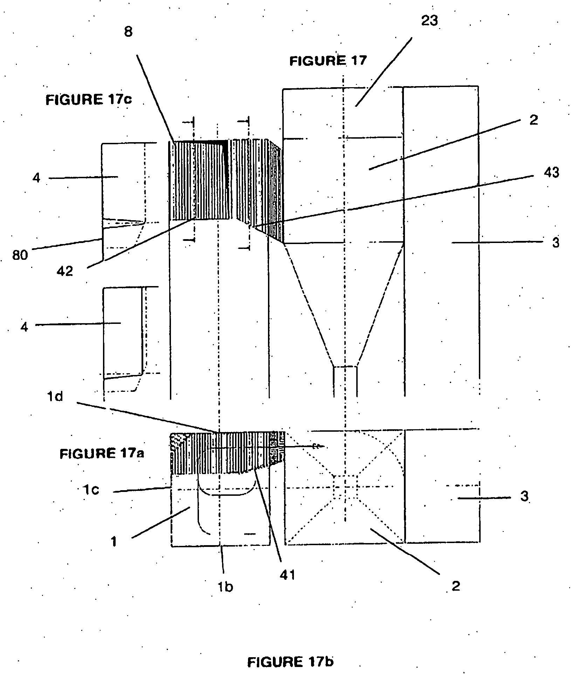

Dans la troisième disposition (figure 17), le plancher 40 est horizontal dans la zone 42 de l'entrée de la gaine 4 puis en pente dans la zone 43 comme dans la disposition précédente.

Dans l'ensemble de ces variantes, le chambre de réactions 1 et les gaines 4 sont tubées. Les tubes 8 constituant le tubage des gaines 4 sont alimentés en fluide caloporteur par les tubes de la paroi 1c ou 1d de la chambre de réactions 1.

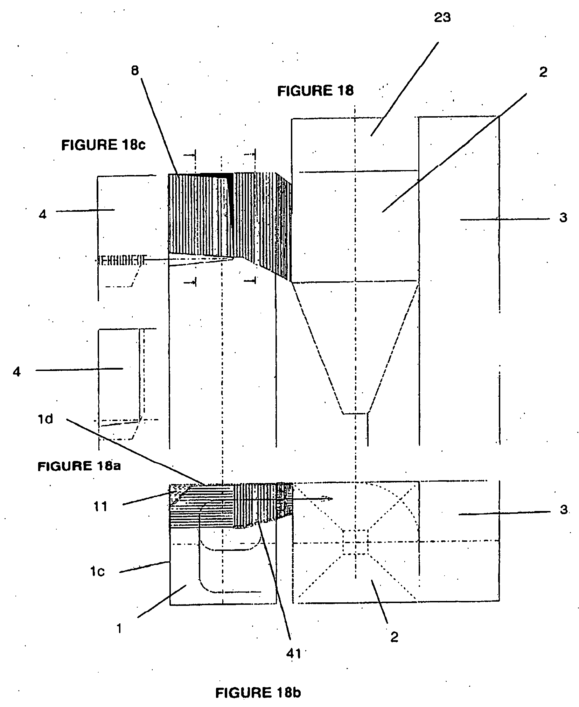

Dans la variante où les gaines 4 sont coudées, le plancher 40 de l'entrée de ladite gaine 4 correspondant à la zone 42 est constitué par des tubes 80 venant de la paroi 1c (figure 18c) ou 1d(figures 15c, 16c, 17c) de la chambre de réactions 1 et y retournant. Le tube 80 fait ainsi un aller retour qui constitue le plancher 40 dans la zone 42 de la gainé 4 (figures 15c à 18c).

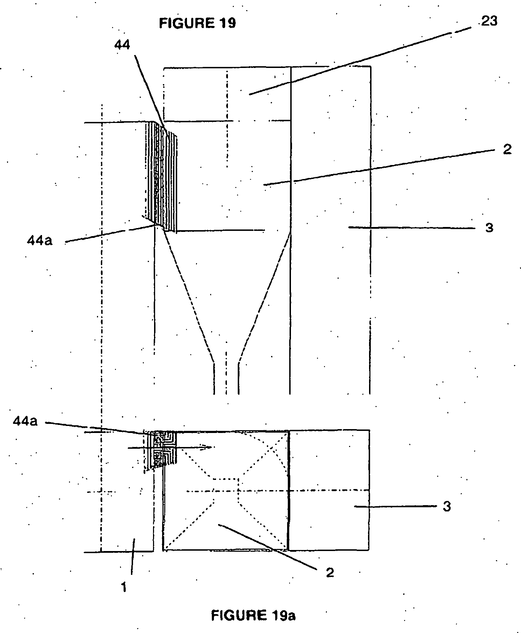

La gaine 4 peut se continuer par une partie finale 44 qui est intégrée ou non, en partie ou en totalité dans le séparateur 2 (figures 19 à 21).

Dans le cas où cette partie 44 de la gaine 4 est totalement incluse dans la chambre de réactions 1 (figure 21, 21a), les tubes 8 des parois de la gaine 4 sont des dérivations de ceux de la chambre de réactions 1 pour le plancher 40 et la paroi 41, les tubes de la paroi de la chambre de réactions 1 pour la paroi 41a.

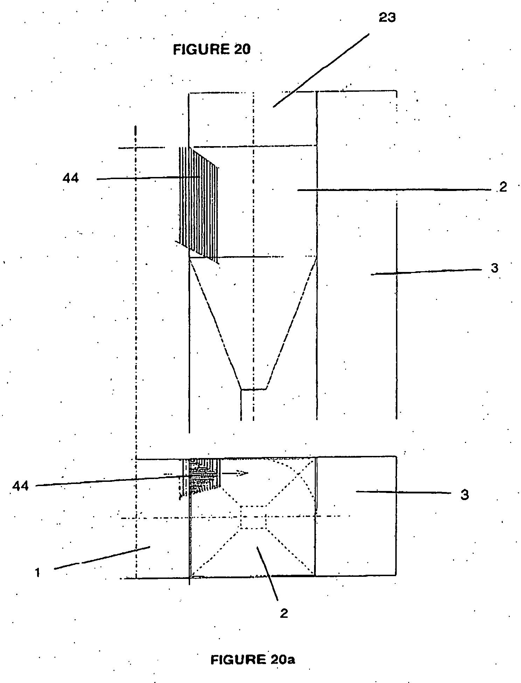

Dans le cas où cette partie 44 est intégrée en totalité ou en partie dans le séparateur 2, les tubes 8 des parois de la gaine 4 sont dos dérivations de ceux du séparateur 2 pour la partie disposée à l'intérieur du séparateur 2 (figures 19, 19a, 20, 20a).

La partie 44a placée entre la chambre de réactions 1 et le séparateur 2 est, elle aussi, tubée par des dérivations qui peuvent venir de la chambre de réactions 1 et/ou du séparateur 2 (figure 19, 19a).

Une chaudière ou un réacteur constituée de deux (réf figure 22) ou plusieurs modules est réalisée en accolant deux modules ou plus. Dans la figure 22, la chaudière, ou le réacteur, est faite de deux modules de base de la première variante positionnés par symétrie par rapport à la chambre de réactions 1.

Le chambre de réactions 1 est la réunion des deux chambres de réaction de base qui constitue alors une chambre de réactions à bas 1e divisé.

Les deux séparateurs 2 placés de part et d'autre de la chambre de réactions 1 sont reliés à la cage arrière 3 par des gaines de liaison 23.

Dans la configuration présentée à la figure 22, il n'y a qu'une cage arrière 3; la gaine de liaison 23a rejoint la cage arrière 3 en longeant le dessus de la chambre de réactions 1, tandis que l'autre gaine 23b accède directement à ladite cage 3. Cette configuration avec une seule cage arrière permet de gagner en compacité.

Un déflecteur 45 est disposé dans le haut de la gaine 4 du coté de la sortie des gaz vers le séparateur 2.

Comme on peut le voir sur les figures 25 à 31, une autre variante est possible: la gaine de liaison 23 qui sert à l'évacuation des gaz est placée à l'intérieur dudit cyclone 2, un déflecteur (non représenté) peut être installé dans le plafond du séparateur 2 afin de faciliter l'entrée des gaz dans le conduit 23. L'évacuation des gaz 23 part au dessus de la partie conique 24 (polygonale ou circulaire) du séparateur 2 et descend jusqu'en bas dudit séparateur 2, ainsi le conduit 23 est suffisamment rigide pour tenir le séparateur 2. L'ensemble chambre de réaction 1 - séparateur 2 - cage arrière 3 est posé sur des massifs en béton 9 par l'intermédiaire d'une poutre 90.

Dans la figure 25, le séparateur 2 est soutenu par le conduit 5 et le siphon 6 et par le conduit 23. Les gaz sont évacués du séparateur 2 par le conduit 23 qui dirige le gaz vers le bas, puis les dirige, vers la passe arrière où ils remontent avant de sortir.

Dans la figure 26, le séparateur est soutenu par le conduit 5, le siphon 6 et le lit extérieur 7 uniquement. Ici, les gaz sont évacués comme précédemment par le conduit 23 qui dirige les gaz à mi-hauteur du séparateur 2, les remontent avant de les redescendre dans la cage arrière 3 d'où ils sortent par le bas de ladite cage 3.

Dans la figure 27, le séparateur est soutenu par le conduit 5 et l'ensemble siphon 6 lit extérieur 7 uniquement. Les gaz sont évacués à mi-hauteur et dirigé vers la cage arrière 3 disposée horizontalement par l'intermédiaire du conduit 23.

La figure 28 représente une variante où le séparateur 2 est soutenu par le conduit 5 et le siphon 6 ainsi que par le conduit 23 et la cage arrière 3 est disposée horizontalement.

La figure 28a représente une variante de la figure 28 où l'ensemble foyer 1, séparateur 2 est suspendu à mi-hauteur sur une charpente métallique 91. Cette configuration permet de réaliser une charpente beaucoup moins haute que les charpentes classiques.

La figure 29 montre une variante où deux séparateurs 2 alimentent la même cage arrière 3. Les deux conduits 23a et 23b se rejoignent dans un conduit commun 230 qui rejoint la cage arrière 3 disposée horizontalement sur cette figure. Le séparateur 2 est soutenu par le conduit 5, le siphon 6 et le lit extérieur 7.

La figure 30 représente l'ensemble chambre de réaction 1, séparateur 2 et cage arrière 3 accolés avec une cage arrière 3 commune aux deux séparateurs 2 et horizontale, cet ensemble constitue un module double.

La figure 31 illustre une autre variante de module, constitué de deux chambres de réactions 1 de quatre séparateurs 2 et d'une seule passe arrière 3 horizontale et commune aux quatre séparateurs 2.

## Revendications

1. Réacteur à lit fluidisé circulant comprenant une chambre de réaction (1) reliée par une gaine d'accélération (4) à un séparateur centrifuge (2) pour séparer des particules à partir de gaz chauds venant de ladite chambre de réaction (1), le séparateur centrifuge (2) étant de forme ronde, polygonale ou carrée, **caractérisé en ce que**:
- la gaine d'accélération (4) est disposée en totalité dans le haut de la chambre de réaction (1), de sorte que le plancher de la gaine d'accélération (4) représente la totalité de la largeur de la paroi de la chambre de réaction (1) parallèle à l'extrados de la gaine d'accélération (4), et
- la gaine d'accélération (4) comporte une bouche d'entrée (46) sensiblement parallèle à l'extrados de la gaine (4).

2. Réacteur à lit fluidisé selon la revendication 1, **caractérisé en ce que** le séparateur centrifuge (2) présente en section transversale des parois verticales sensiblement rectilignes.

3. Réacteur selon la revendication 2, **caractérisé en ce que** le séparateur centrifuge (2) comporte une paroi commune avec la chambre de réaction (1).

4. Réacteur à lit fluidisé selon la revendication 2 ou 3, **caractérisé en ce que** le séparateur centrifuge (2) comporte une paroi commune avec une cage arrière de la chaudière.

5. Réacteur à lit fluidisé selon la revendication 3, **caractérisé en ce que** la chambre de réaction (1) comporte une paroi (1 b) commune avec la cage arrière (3).

6. Réacteur à lit fluidisé selon l'une des revendications 2 à 5, **caractérisé en ce que** l'ensemble constitué de la chambre de réactions (1), du séparateur (2) et de la cage arrière (3) constitue un module de base.

7. Réacteur à lit fluidisé selon la revendication 6, **caractérisé en ce que** la chambre de réaction (1) et le séparateur (2) ont des parois extérieures alignées.

8. Réacteur à lit fluidisé selon la revendication 6 ou 7, **caractérisé en ce que** la puissance du réacteur est fonction du nombre des modules de base utilisés.

9. Réacteur à lit fluidisé selon l'une des revendications 6 à 8, **caractérisé en ce que** deux modules adjacents comprennent une paroi commune.

10. Réacteur à lit fluidisé selon la revendication 9, **caractérisé en ce que** la paroi commune à deux modules et placée entre deux séparateurs (2) est partielle.

11. Réacteur à lit fluidisé selon l'une des revendications 6 à 10, **caractérisé en ce que** les chambres de réaction (1) de deux modules adjacents sont réunies.

12. Réacteur à lit fluidisé selon l'une des revendications 6 à 11, **caractérisé en ce que** les cages arrière (3) de deux modules adjacents sont réunies.

13. Réacteur à lit fluidisé selon l'une des revendications 2 à 12, **caractérisé en ce que** la paroi intérieure de la chambre de réaction (1) comporte au moins un déflecteur (11) d'entrée de la gaine d'accélération.

14. Réacteur à lit fluidisé selon l'une des revendications 2 à 13, **caractérisé en ce que** les parois sont tubées.

15. Réacteur à lit fluidisé selon la revendication 14, **caractérisé en ce que** les parois de la gaine d'accélération (4), du séparateur (2), du bas et du haut de la chambre de réaction (1) sont recouvertes d'une couche de matériau réfractaire.

16. Réacteur à lit fluidisé selon la revendication 14, **caractérisé en ce que** les parois de la partie de la gaine d'accélération (4) située dans la chambre de réaction utilise des tubes (8) pris dans les parois de la chambre de réaction (80).

17. Réacteur à lit fluidisé selon la revendication 14, **caractérisé en ce que** les parois de la partie de la gaine d'accélération (4) située dans la chambre de réaction utilise des tubes (8) pris dans les parois du séparateur (2).

18. Réacteur à lit fluidisé selon l'une des revendications 2 à 17, **caractérisé en ce que** les parois de la gaine d'accélération (4) sont constituées de tubes (8) formant un circuit distinct.

19. Réacteur à lit fluidisé selon la revendication 14 ou 16, **caractérisé en ce que** les parois (44a) de la gaine d'accélération (4) sont réalisées en utilisant des tubes (80) des parois de la chambre de réaction (1) et du séparateur (2).

20. Réacteur à lit fluidisé selon la revendication 13, **caractérisé en ce que** le déflecteur (11, 45) est formé par des tubes (8) déviés venant des parois de la chambre de réaction (1).

21. Réacteur à lit fluidisé selon l'une des revendications 2 à 20, **caractérisé en ce qu'**un déflecteur est formé par un arrondi des tubes (8) du plancher de la gaine (4).

22. Réacteur à lit fluidisé selon l'une des revendications 2 à 21, **caractérisé en ce que** le plancher (40, 42, 43) de la gaine (4) possède au moins une inclinaison vers le séparateur (2).

23. Réacteur à lit fluidisé selon l'une des revendications 2 à 22, **caractérisé en ce que** le plancher (40, 42, 43) de la gaine (4) possède au moins une inclinaison vers l'extrados de la gaine (4).

24. Réacteur à lit fluidisé selon l'une des revendications 2 à 23, **caractérisé en ce que** les parois extérieure et intérieure (41) de la gaine (4) présentent plusieurs changements de section.

## Patentansprüche

1. Reaktor mit zirkulierender Wirbelschicht, umfassend eine Reaktionskammer (1), die durch eine Beschleunigungsschleuse (4) mit einem Zentrifugalabscheider (2) verbunden ist, um Partikel ausgehend von heißen Gasen abzuscheiden, die von der Reaktionskammer (1) herkommen, wobei der Zentrifugalabscheider (2) von runder, polygonaler oder quadratischer Form ist, **dadurch gekennzeichnet, dass**:
- die Beschleunigungsschleuse (4) ganz in dem oberen Teil der Reaktionskammer (1) angeordnet ist, so dass der Boden der Beschleunigungsschleuse (4) die Gesamtheit der Länge der Wand der Reaktionskammer (1) darstellt, die parallel zu der Oberseite der Beschleunigungsschleuse (4) ist, und
- die Beschleunigungsschleuse (4) eine Eintrittsöffnung (46) aufweist, die im Wesentlichen parallel zu der Oberseite der Schleuse (4) ist.

2. Reaktor mit Wirbelschicht nach Anspruch 1, **dadurch gekennzeichnet, dass** der Zentrifugalabscheider (2) im Querschnitt vertikale Wände aufweist, die im Wesentlichen geradlinig sind.

3. Reaktor mit Wirbelschicht nach Anspruch 2, **dadurch gekennzeichnet, dass** der Zentrifugalabscheider (2) eine gemeinsame Wand mit der Reaktionskammer (1) aufweist.

4. Reaktor mit Wirbelschicht nach Anspruch 2 oder 3, **dadurch gekennzeichnet, dass** der Zentrifugalabscheider (2) eine gemeinsame Wand mit einem hinteren Gehäuse (3) des Heizkessels aufweist.

5. Reaktor mit Wirbelschicht nach Anspruch 3, **dadurch gekennzeichnet, dass** die Reaktionskammer (1) eine gemeinsame Wand (1b) mit dem hinteren Gehäuse (3) aufweist.

6. Reaktor mit Wirbelschicht nach einem der Ansprüche 2 bis 5, **dadurch gekennzeichnet, dass** die Anordnung, die aus der Reaktionskammer (1), dem Abscheider (2) und dem hinteren Gehäuse (3) gebildet ist, ein Basismodul bildet.

7. Reaktor mit Wirbelschicht nach Anspruch 6, **dadurch gekennzeichnet, dass** die Reaktionskammer (1) und der Abscheider (2) ausgerichtete Außenwände aufweisen.

8. Reaktor mit Wirbelschicht nach Anspruch 6 oder 7, **dadurch gekennzeichnet, dass** die Leistung des Reaktors von der Anzahl der verwendeten Basismodule abhängt.

9. Reaktor mit Wirbelschicht nach einem der Ansprüche 6 bis 8, **dadurch gekennzeichnet, dass** die zwei angrenzenden Module eine gemeinsame Wand aufweisen.

10. Reaktor mit Wirbelschicht nach Anspruch 9, **dadurch gekennzeichnet, dass** die Wand, die zwei Modulen gemein ist und zwischen zwei Abscheidern (2) angeordnet ist, partiell ist.

11. Reaktor mit Wirbelschicht nach einem der Ansprüche 6 bis 10, **dadurch gekennzeichnet, dass** die Reaktionskammern (1) von zwei angrenzenden Modulen vereint sind.

12. Reaktor mit Wirbelschicht nach einem der Ansprüche 6 bis 11, **dadurch gekennzeichnet, dass** die hinteren Gehäuse (3) von zwei angrenzenden Modulen vereint sind.

13. Reaktor mit Wirbelschicht nach einem der Ansprüche 2 bis 12, **dadurch gekennzeichnet, dass** die Innenwand der Reaktionskammer (1) mindestens einen Eingangsdeflektor (11) der Beschleunigungsschleuse aufweist.

14. Reaktor mit Wirbelschicht nach einem der Ansprüche 2 bis 13, **dadurch gekennzeichnet, dass** die Wände verrohrt sind.

15. Reaktor mit Wirbelschicht nach Anspruch 14, **dadurch gekennzeichnet, dass** die Wände der Beschleunigungsschleuse (4), des Abscheiders (2), des unteren und oberen Teils der Reaktionskammer (1) mit einer Schicht aus feuerfestem Material bedeckt sind.

16. Reaktor mit Wirbelschicht nach Anspruch 14, **dadurch gekennzeichnet, dass** die Wände des Teils der Beschleunigungsschleuse (4), der in der Reaktionskammer angeordnet ist, Rohre (8) verwendet, die in den Wänden der Reaktionskammer (80) aufgenommen sind.

17. Reaktor mit Wirbelschicht nach Anspruch 14, **dadurch gekennzeichnet, dass** die Wände des Teils der Beschleunigungsschleuse (4), der in der Reaktionskammer angeordnet ist, Rohre (8) verwendet, die in den Wänden des Abscheiders (2) aufgenommen sind.

18. Reaktor mit Wirbelschicht nach einem der Ansprüche 2 bis 17, **dadurch gekennzeichnet, dass** die Wände der Beschleunigungsschleuse (4) aus Rohren (8) gebildet sind, die einen getrennten Kreislauf bilden.

19. Reaktor mit Wirbelschicht nach Anspruch 14 oder 16, **dadurch gekennzeichnet, dass** die Wände (44a) der Beschleunigungsschleuse (4) unter Verwendung von Rohren (8) der Wände der Reaktionskammer (1) und des Abscheiders (2) erstellt sind.

20. Reaktor mit Wirbelschicht nach Anspruch 13, **dadurch gekennzeichnet, dass** der Deflektor (11, 45) durch umgeleitete Rohre (8) gebildet ist, die von den Wänden der Reaktionskammer (1) kommen.

21. Reaktor mit Wirbelschicht nach einem der Ansprüche 2 bis 20, **dadurch gekennzeichnet, dass** ein Deflektor durch eine Abrundung der Rohre (8) des Bodens der Schleuse (4) gebildet ist.

22. Reaktor mit Wirbelschicht nach einem der Ansprüche 2 bis 21, **dadurch gekennzeichnet, dass** der Boden (40, 42, 43) der Schleuse (4) mindestens eine Neigung zu dem Abscheider (2) aufweist.

23. Reaktor mit Wirbelschicht nach einem der Ansprüche 2 bis 22, **dadurch gekennzeichnet, dass** der Boden (40, 42, 43) der Schleuse (4) mindestens eine Neigung zu der Oberseite der Schleuse (4) aufweist.

24. Reaktor mit Wirbelschicht nach einem der Ansprüche 2 bis 23, **dadurch gekennzeichnet, dass** die Außenwand und die Innenwand (41) der Schleuse (4) mehrere Querschnittsänderungen aufweisen.

## Claims

1. Circulating fluidized bed reactor comprising a reaction chamber (1) connected by an acceleration duct (4) to a centrifugal separator (2) for separating particles from hot gases coming from said reaction chamber (1), the centrifugal separator (2) being round, polygonal or square, which reactor is **characterized in that**:
- all of the acceleration duct (4) is inside the top of the reaction chamber (1) so that the floor of the acceleration duct (4) represents the whole of the width of the wall of the reaction chamber (1) parallel to the extrados of the acceleration duct (4), and
- the acceleration duct (4) has an inlet mouth (46) substantially parallel to the extrados of the duct (4).

2. Fluidized bed reactor according to, Claim 1 **characterized in that** the centrifugal separator (2) has substantially straight vertical walls in cross section.

3. Fluidized bed reactor according to Claim 2, **characterized in that** the centrifugal separator (2) and the reaction chamber (1) have a common wall.

4. Fluidized bed reactor according to Claim 2 or 3, **characterized in that** the centrifugal separator (2) and a rear cage (3) of the boiler have a common wall.

5. Fluidized bed reactor according to Claim 3, **characterized in that** the reaction chamber (1) and the rear cage (3) have a common wall (1b).

6. Fluidized bed reactor according to any of Claims 2 to 5, **characterized in that** the combination of the reaction chamber (1), the separator (2) and the rear cage (3) constitutes a basic module.

7. Fluidized bed reactor according to Claim 6, **characterized in that** the reaction chamber (1) and the separator (2) have aligned exterior walls.

8. Fluidized bed reactor according to Claim 6 or 7, **characterized in that** the power of the reactor is a function of the number of basic modules used.

9. Fluidized bed reactor according to any of Claims 6 to 8, **characterized in that** two adjacent modules have a common wall.

10. Fluidized bed reactor according to Claim 9, **characterized in that** the wall common to two modules and between two separators (2) is a partial wall.

11. Fluidized bed reactor according to any of Claims 6 to 10, **characterized in that** the reaction chambers (1) of two adjacent modules are combined.

12. Fluidized bed reactor according to any of Claims 6 to 11, **characterized in that** the rear cages (3) of two adjacent modules are combined.

13. Fluidized bed reactor according to any of Claims 2 to 12, **characterized in that** the interior wall of the reaction chamber (1) includes at least one inlet deflector (11) of the acceleration duct.

14. Fluidized bed reactor according to any of Claims 2 to 13, **characterized in that** the walls are tubed.

15. Fluidized bed reactor according to Claim 14, **characterized in that** the walls of the acceleration duct (4) and the separator (2) and the bottom wall and the top wall of the reaction chamber (1) are covered with a layer of refractory material.

16. Fluidized bed reactor according to Claim 14, **characterized in that** the walls of the portion of the acceleration duct (4) inside the reaction chamber use tubes (8) from the walls of the reaction chamber (80).

17. Fluidized bed reactor according to Claim 14, **characterized in that** the walls of the portion of the acceleration duct (4) inside the reaction chamber use tubes (8) from the walls of the separator (2).

18. Fluidized bed reactor according to any of Claims 2 to 17, **characterized in that** the walls of the acceleration duct (4) consist of tubes (8) forming a separate circuit.

19. Fluidized bed reactor according to Claim 14 or 16, **characterized in that** the walls (44a) of the acceleration duct (4) consist of tubes (80) from the walls of the reaction chamber (1) and the separator (2).

20. Fluidized bed reactor according to Claim 13, **characterized in that** the deflector (11, 45) consists of tubes (8) diverted from the walls of the reaction chamber (1).

21. Fluidized bed reactor according to any of Claims 2 to 20, **characterized in that** a deflector is formed by rounding the tubes (8) of the floor of the duct (4).

22. Fluidized bed reactor according to any of Claims 2 to 21, **characterized in that** the floor (40, 42, 43) of the duct (4) is inclined toward the separator (2).

23. Fluidized bed reactor according to any of Claims 2 to 22, **characterized in that** the floor (40, 42, 43) of the duct (4) is inclined toward the extrados of the duct (4).

24. Fluidized bed reactor according to any of Claims 2 to 23, **characterized in that** the section of the exterior and interior walls (41) of the duct (4) changes more than once.
